# EUROPEAN PATENT SPECIFICATION

(11) **EP 1 653 100 B1**
(45) Date of publication and mention of the grant of the patent: **04.01.2012**
(21) Application number: 04748212.0
(22) Date of filing: 03.08.2004
(51) Int. Cl.: F16D 1/06

(54) **POWER TRANSMISSION MECHANISM OF SHAFT AND HUB**
KRAFTÜBERTRAGUNGSMECHANISMUS FÜR WELLE UND NABE
MECANISME DE TRANSMISSION DE PUISSANCE D'UN ARBRE ET D'UN MOYEU

(30) Priority: 07.08.2003 JP 2003288544; 07.08.2003 JP 2003288547; 07.08.2003 JP 2003288551; 13.07.2004 JP 2004205716; 14.07.2004 JP 2004207464; 14.07.2004 JP 2004207557
(43) Date of publication of application: 03.05.2006
(73) Proprietor: HONDA MOTOR CO., LTD., Tokyo 107-8556 (JP)
(72) Inventor: IGARASHI, Masahiko c/o Honda Giken Kogyo Kabushiki, Mooka-shi, Tochigi-ken 321-4346 (JP); MOCHIZUKI, Takeshi c/o Honda Giken Kogyo Kabushiki, Mooka-shi, Tochigi-ken 321-4346 (JP); KOSUGI, Masanori c/o Honda Giken Kogyo Kabushiki, Mooka-shi, Tochigi-ken 321-4346 (JP)
(74) Representative: Herzog, Markus
(86) International application number: PCT/JP2004/011080
(87) International publication number: WO 2005/015041

(56) References cited:
- EP-A- 1 016 801
- DE-A1- 2 656 946
- DE-A1- 19 523 584
- FR-A- 1 581 658
- FR-A- 2 802 255
- JP-A- 07 301 304
- JP-A- 11 514 079
- JP-A- 2000 097 244
- JP-B1- 33 010 508
- US-A- 6 142 033

## Description

### TECHNICAL FIELD

The present invention relates to a power transmitting mechanism for transmitting torque smoothly between two members comprising a shaft and a hub.

### BACKGROUND ART

On motor vehicles such as automobiles, there have been employed a set of constant velocity joints for transmitting drive power from an engine through a shaft to axles. Each constant velocity joint comprises an outer member, an inner member, and a torque transmitting member disposed between the outer and inner members for transmitting torque between the outer and inner members. The constant velocity joint includes a shaft/hub unit having a tooth assembly which comprises a shaft tooth section on the shaft and a hub tooth section on a hub, the shaft tooth section and the hub tooth section being held in mesh with each other.

In recent years, there have been demands for efforts to reduce circumferential backlash of constant velocity joints which is caused by the chattering of the power transmitting system such as noise and vibration. Heretofore, attempts have been made to reduce backlash between the inner ring and the shaft with a constant velocity joint having shaft serrations tilted at a torsional angle. Depending on the direction of the torsional angle and the direction of the torque load, the mechanical strength and service life of the inner ring and the shaft are likely to vary from product to product.

In the art of gears, technical concepts for crowning tooth surfaces have been disclosed in Japanese Laid-Open Patent Publication No. 2-62461, Japanese Laid-Open Patent Publication No. 3-69844, and Japanese Laid-Open Patent Publication No. 3-32436, for example.

The applicant of the present application has proposed a spline shaft wherein the crowning top is positioned where the stress is minimized when torque is applied to a region where the spline shaft and a constant velocity joint mesh with each other, thereby preventing the stress from concentrating on certain regions and simplifying the overall structure of the spline shaft (see Japanese Laid-Open Patent Publication No. 2001-287122).

US-A-6 142 033, on which the preamble of claim 1 is based, shows a mechanism for transmitting torque between a shaft and a hub disposed around the shaft while holding a shaft tooth section formed on the hub in engagement with each other, wherein
said shaft tooth section has a straight peak having a constant tooth thickness and a valley having an outside diameter varying from an end of the shaft toward a shaft shank of the shaft;
said hub tooth section has a straight peak having a constant tooth thickness and having an inside diameter varying from an end thereof toward said shaft shank and a valley having a constant inside diameter in the axial direction of the shaft; and
said valley of said shaft tooth section has a first step region raised toward said hub tooth section, and said peak of said hub tooth section has a second step region retracted away from said shaft tooth section.

### DISCLOSURE OF THE INVENTION

### PROBLEMS TO BE SOLVED BY THE INVENTION

It is a general object of the present invention to provide a power transmitting mechanism for a shaft and a hub, which is designed to prevent stresses from concentrating on certain regions for increased static mechanical strength and fatigue strength.

### MEANS FOR SOLVING THE PROBLEMS

For solving this object, a mechanism in accordance with claim 1 is provided.

According to the present invention, when torque is applied to a portion between a shaft and a hub wherein a shaft tooth section and a hub tooth section are held in mesh with each other, by increasing the outside diameter of a valley of the shaft tooth section, which is a stress concentrating region, the stresses are distributed and strength of the shaft is increased.

### BRIEF DESCRIPTION OF THE DRAWINGS

FIG. 1 s a perspective view, partly cut away, of a shaft/hub unit which incorporates a power transmitting mechanism according to a first embodiment not covered by the present claims;
FIG. 2 is an enlarged partial transverse cross-sectional view showing a shaft tooth section and a hub tooth section which are held in mesh with each other in the shaft/hub unit shown in FIG. 1;
FIG. 3 is an enlarged partial longitudinal cross-sectional view in the axial direction of a shaft, showing a peak of the hub tooth section which engages in a valley of the shaft tooth section shown in FIG. 1:
FIG. 4 is an enlarged partial longitudinal cross-sectional view showing a tapered surface of a first step region slanted at a smaller tilt angle θ of the shaft shown in FIG. 3;
FIG. 5 is an enlarged partial longitudinal cross-sectional view showing a tooth of the shaft tooth section whose outside diameter varies toward a shaft shank of the shaft shown in FIG. 4;
FIG. 6 is a diagram showing the relationship between the tilt angle θ of the first step region of the shaft tooth section, stress relaxation, and productivity;
FIG. 7 is a graph showing the relationship between stresses developed on the shaft and positions where the stresses are measured with respect to a shaft wherein a first step region and a second step region are not formed in a shaft tooth section and a hub tooth section and a shaft wherein a first step region and a second step region are formed in a shaft tooth section and a hub tooth section;
FIG. 8 is a graph showing the relationship between stresses developed on the shaft and positions where the stresses are measured with respect to a shaft wherein a first step region is slanted at a much smaller tilt angle θ;
FIG. 9 is a graph showing the relationship between stresses developed on the shaft and positions where the stresses are measured, with respect to a shaft wherein a changing point of the diameter of a shaft tooth section and a changing point of the diameter of a hub tooth section are offset from each other and to a shaft wherein a changing point of the diameter of a shaft tooth section and a changing point of the diameter of a hub tooth section are not offset from each other;
FIG. 10 is a graph showing the relationship between stresses developed on the shaft and positions where the stresses are measured when the stresses are produced in response to an input load imposed at the time torque is applied;
FIG. 11 is an enlarged partial longitudinal cross-sectional view taken along line XI - XI of FIG. 3;
FIG. 12 is an enlarged partial longitudinal cross-sectional view taken along line XII - XII of FIG. 3;
FIG. 13 is an enlarged longitudinal cross-sectional view of a modification wherein spline teeth in a shaft tooth section and a hub tooth section are of an involute shape;
FIG. 14 is a perspective view, partly cut away, of a shaft/hub unit which incorporates a power transmitting mechanism according to a second embodiment not covered by the present claims ;
FIG. 15 is an enlarged partial longitudinal cross-sectional view in the axial direction of a shaft, showing a peak of a hub tooth section which engages in a valley of a shaft tooth section shown in FIG. 14;
FIG. 16 is an enlarged partial longitudinal cross-sectional view showing that a point P1 as a starting point of an arcuate region formed in the shaft tooth section and a point P2 as a starting point of a step region formed in a the hub tooth section are vertically aligned with each other without being offset;
FIG. 17 is a graph showing the relationship between stresses developed on the shaft and positions where the stresses are measured with respect to a shaft wherein no step region is formed in a hub tooth section and a shaft wherein an arcuate region is formed in a shaft tooth section;
FIG. 18 is an enlarged partial longitudinal cross-sectional view taken along line XVIII - XVIII of FIG. 15;
FIG. 19 is an enlarged partial longitudinal cross-sectional view taken along line XIX - XIX of FIG. 15;
FIG. 20 is a perspective view, partly cut away, of a shaft/hub unit which incorporates a power transmitting mechanism according to a third embodiment not covered by the present claims ;
FIG. 21 is an enlarged partial longitudinal cross-sectional view in the axial direction of a shaft, showing a peak of a hub tooth section which engages in a valley of a shaft tooth section shown in FIG. 20;
FIG. 22 is an enlarged partial longitudinal cross-sectional view showing a tooth of the shaft tooth section whose outside diameter varies toward a shaft shank of the shaft shown in FIG. 21;
FIG. 23 is a diagram showing the relationship between the rise angle 6 of a tapered region of the shaft tooth section, stress relaxation, and productivity;
FIG. 24 is a graph showing the relationship between stresses developed on the shaft and positions where the stresses are measured, with respect to a shaft wherein a tapered region and a step region are not formed in a shaft tooth section and a hub tooth section and a shaft wherein a tapered region and a step region are formed without being offset;
FIG. 25 is a graph showing the relationship between stresses developed on the shaft and positions where the stresses are measured, with respect to a shaft wherein a tapered region and a step region are not formed in a shaft tooth section and a hub tooth section and a shaft wherein starting points of a tapered region and a step region are offset from each other ;
FIG. 26 is a graph showing the relationship between stresses developed on the shaft and positions where the stresses are measured, with respect to a shaft wherein a changing point of the diameter of a shaft tooth section and a changing point of the diameter of a hub tooth section are offset from each other and to a shaft wherein a changing point of the diameter of a shaft tooth section and a changing point of the diameter of a hub tooth section are not offset from each other;
FIG. 27 is an enlarged partial longitudinal cross-sectional view taken along line XXVII - XXVII of FIG. 21;
FIG. 28 is an enlarged partial longitudinal cross-sectional view taken along line XXVIII - XXVIII of FIG. 21;
FIG. 29 is a perspective view, partly cut away, of a shaft/hub unit which incorporates a power transmitting mechanism according to the present invention;
FIG. 30 is an enlarged partial longitudinal cross-sectional view in the axial direction of a shaft, showing a peak of a hub tooth section which engages in a valley of a shaft tooth section shown in FIG. 29;
FIG. 31 is an enlarged partial longitudinal cross-sectional view showing a first tapered region having a small tilt angle θ in a step region of the shaft shown in FIG. 30:
FIG. 32 is an enlarged partial longitudinal cross-sectional view in the axial direction of the shaft, showing that a hub having a second tapered region in a hub tooth section engages the shaft shown in FIG. 31, not covered by the claims ;
FIG. 33 is an enlarged partial longitudinal cross-sectional view in the axial direction of the shaft, showing that a hub having an arcuate of predetermined radius of curvature in a hub tooth section engages the shaft shown in FIG. 31, not covered by the claims
FIG. 34 is an enlarged partial longitudinal cross-sectional view showing a tooth of the shaft tooth section whose outside diameter varies toward a shaft shank of the shaft shown in FIG. 31;
FIG. 35 is a diagram showing the relationship between the tilt angle 6 of the step region of the shaft tooth section, stress relaxation, and productivity;
FIG. 36 is an enlarged partial longitudinal cross-sectional view taken along line XXXVI - XXXVI of FIG. 30;
FIG. 37 is an enlarged partial longitudinal cross-sectional view taken along line XXXVII - XXXVII of FIG. 30; and
FIG. 38 is a fragmentary perspective view showing the manner in which the spline teeth of a shaft tooth section are formed by rolling racks.

### BEST MODE FOR CARRYING OUT THE INVENTION

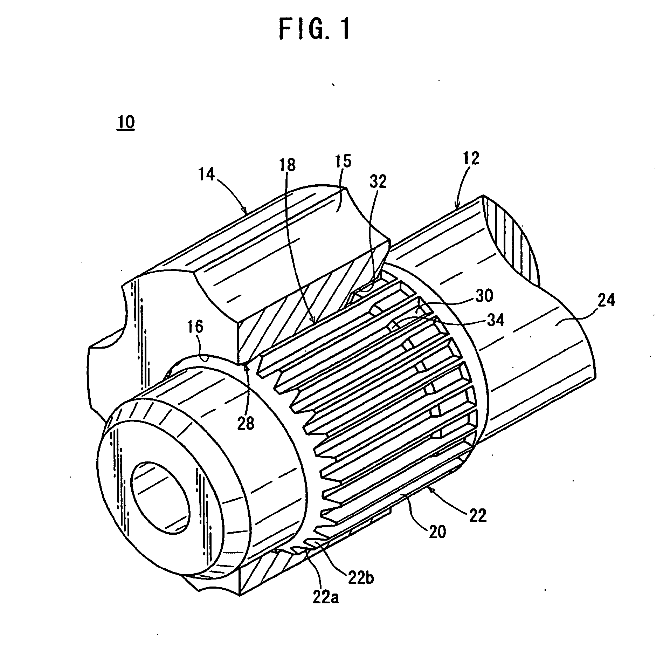

FIG. 1 shows a shaft/hub unit 10 which incorporates a power transmitting mechanism according to a first embodiment. The shaft/hub unit 10 serves as part of a constant velocity joint. The shaft/hub unit 10 comprises a shaft 12 functioning as a power transmitting shaft and a hub 14 functioning as an inner ring that is disposed in openings in an outer cup (not shown) and has guide grooves 15 receiving therein balls (not shown).

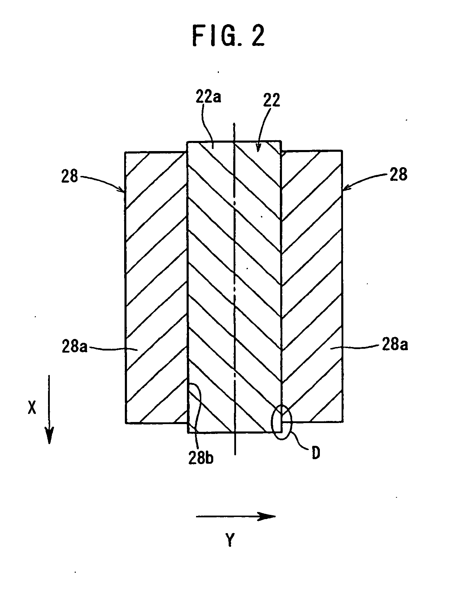

The shaft 12 has fitting portions 18 on its respective opposite ends each fitting in an axial hole 16 in the hub 14. In FIG. 1, only one end of the shaft 12 is shown, with the other end omitted from illustration. The fitting portion 18 has a shaft tooth section 22 comprising a plurality of straight spline teeth 20 which have a predetermined tooth length in the axial direction of the shaft 12 and which are formed successively in the circumferential direction of the shaft 12. Specifically, the shaft tooth section 22 comprises a circumferentially alternate succession of convex peaks 22a and concave valleys 22b. As shown in FIG. 2, the peaks 22a of the shaft tooth section 22 have substantially the same tooth thickness, and extend substantially parallel to the axis of the shaft 12 (see FIG. 1).

The shaft 12 has a shaft shank 24 extending from an end of the shaft tooth section 22 which is closer to the center of the shaft 12. A retaining ring (not shown) is mounted in an annular groove (not shown) defined in the end of the shaft 12 for preventing the hub 14 from being released from the shaft 12.

The hub 14 has, on the inner circumferential surface of the axial hole 16, a hub tooth section 28 having a plurality of straight spline teeth 26 that fit in the fitting portion 18 of the shaft 12. Specifically, the hub tooth section 28 comprises a circumferentially alternate succession of convex peaks 28a and concave valleys 28b. As shown in FIG. 2, the peaks 28a have substantially the same tooth thickness and extend substantially parallel to the axial direction of the shaft 12.

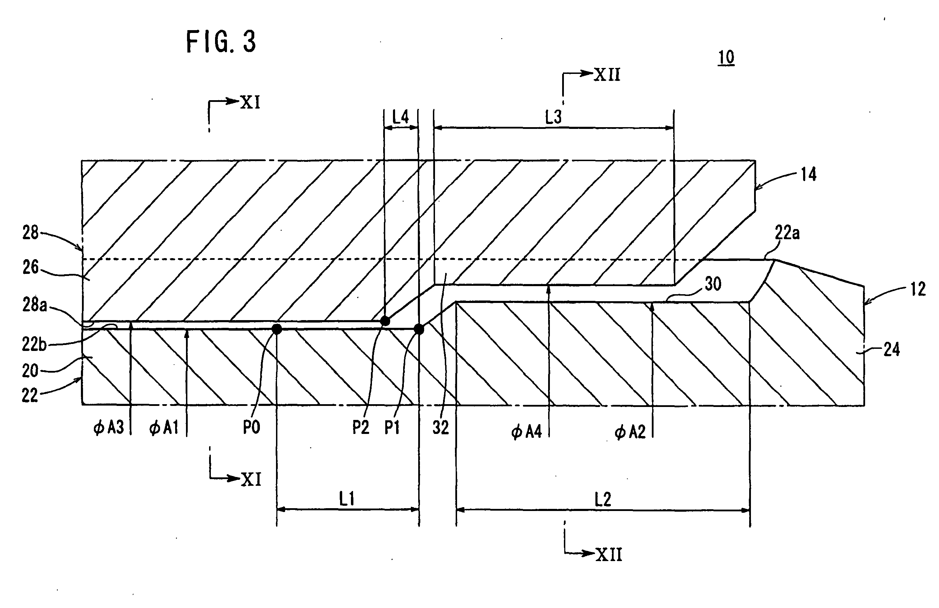

FIG. 3 shows, in enlarged partial longitudinal cross section in the axial direction of the shaft 12, that a peak 28a of the hub tooth section 28 engages in a valley 22b of the shaft tooth section 22. In FIG. 3, a position corresponding to an axially central point of the shaft tooth section 22 is represented by P0.

A point P1 (changing point) is established on the bottom land of the valley 22b at a position which is displaced horizontally a predetermined distance L1 toward the shaft shank 24 from the central point P0 of the shaft tooth section 22 on the bottom land of the valley 22b (valley radius φA1). From the point P1, the bottom land of the valley 22 is raised radially outwardly toward the hub tooth section 28, providing a first step region 30 having a valley radius φA2. The first step region 30 extends horizontally a predetermined distance L2 toward the shaft shank 24 and is joined to the shaft shank 24.

The first step region 30 of the shaft tooth section 22 may have a slanted surface or an arcuate curved surface or a compound surface having a predetermined radius of curvature.

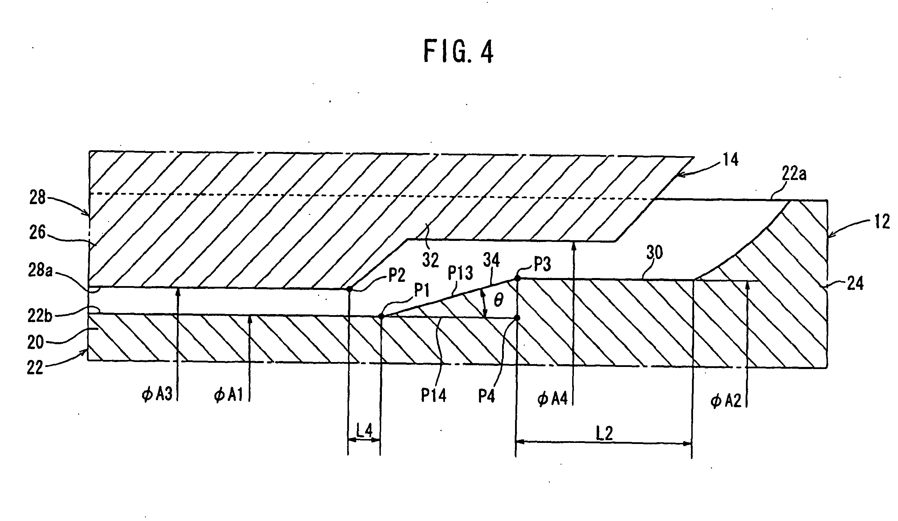

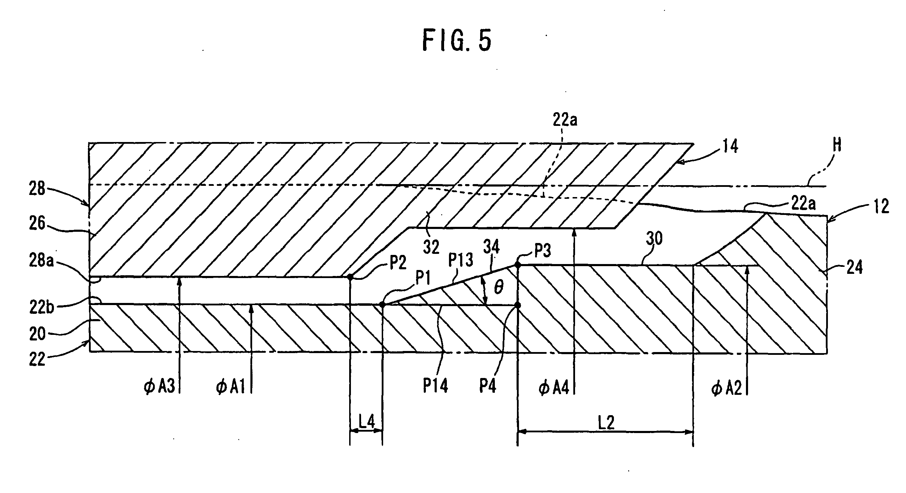

The peak 22a of the shank tooth section 22 has an outside diameter which may remain constant in the axial direction, as shown in FIGS. 3 and 4, or which may progressively decrease from an area close to the point P1 toward the shaft shank 24, as shown in FIG. 5. With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 5, the reference character "H" represents a horizontal line to be compared with a change (reduction) in the outside diameter of the peak 22a.

On the peak 28a of the hub tooth section 28, there is established a point P2 at a position which is offset a predetermined distance L4 from the point P1 in the shaft tooth section 22 in a horizontal direction away from the shaft shank 24. From the point P2, the peak 28a changes its peak radius φA3 to a peak radius φA4, providing a second step region 32 with the peak radius φA4. The second step region 32 extends horizontally a predetermined distance L3 toward the shaft shank 24.

The second step region 32 of the hub tooth section 28 may have a slanted surface or an arcuate curved surface or a compound surface having a predetermined radius of curvature, and may be of a shape different from the shape of the first step region 30. The tilt angle of the second step region 32 is set as desired complementarily to the tilt angle of the first step region 30. The shape of the hub tooth section 28 is not limited to the shape of the second step region 32, but may include a round shape, a tapered tape, or the like having a predetermined radius of curvature. The valleys 28b of the hub tooth section 28 have an inside diameter which remains constant.

The valley radii φA1, φA2 represent respective distances from the central axis of the shaft 12 to the bottom lands of the valley 22b of the shaft tooth section 22. The peak radii φA3, φA4 represent respective distances from the central axis of the shaft 12 to the top lands of the peak 28a of the hub tooth section 28.

The distance L2 in the shaft tooth section 22 may be set to a value greater than the distance L1 in the shaft tooth section 22 (L1 < L2). The distance L2 in the shaft tooth section 22 and the distance L3 in the hub tooth section 22 may be set to substantially equal values (L2 = L3), or the distance L3 in the hub tooth section 22 may be set to a value greater than the distance L2 in the shaft tooth section 22 (L2 < L3), for allowing an offset (described later) to be easily established depending on dimensional tolerance and dimensional accuracy and also for improving the ease in assembling the shaft 12 and the hub 14 together. In FIG. 3, the distance L2 and the distance L3 are not plotted accurately to actual dimensions.

As can be seen from FIG. 3, the point P1 as a starting point (changing point) where the first step region 30 of the shaft tooth section 22 starts to rise and the point P2 as a starting point (changing point) where the second step region 32 of the hub tooth section 28 starts to rise are offset substantially horizontally from each other by a predetermined distance L4.

Therefore, when torque is applied to the shaft/hub unit 10 wherein the shaft tooth section 22 and the hub tooth section 28 mesh with each other, since the point P1 in the shaft tooth section 22 and the point P2 in the hub tooth section 28 are offset from each other by the distance L4, the stresses imposed on the shaft/hub unit 10 are distributed to the points P1, P2, thereby relaxing stress concentration. As a result, static mechanical strength and fatigue strength of the area where the shaft tooth section 22 and the hub tooth section 28 mesh with each other are increased.

In FIG. 4, a right-angled triangle formed by interconnecting points P1, P3, P4 may have its cross-sectional area increased, and the angle θ formed between a line segment P14 interconnecting the points P1, P4 and a line segment P13 interconnecting the points P1, P3, i.e., the tilt angle θ of the first step region 30, may be set to a smaller value for further relaxing stress concentration with a tapered surface 34 of the first step region 30.

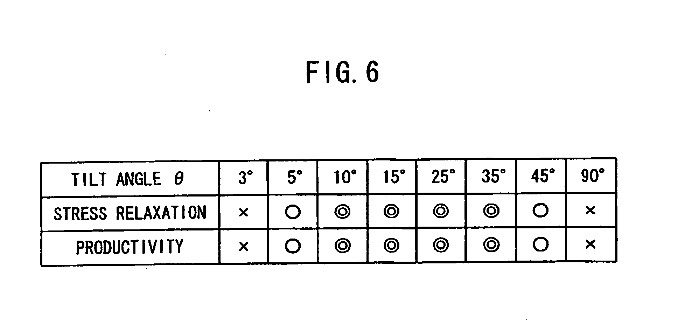

The relationship between the tilt angle θ of the first step region 30, stress relaxation, and productivity is shown in FIG. 6. It can be seen from FIG. 6 that stress relaxation and productivity are good (see symbol "O") if the tilt angle θ is set to a value in the range from 5 degrees to 45 degrees, and optimum (see symbol "⊚") if the tilt angle θ is set to a value in the range from 10 degrees to 35 degrees.

If the tilt angle θ is set to 3 degrees, no sufficient stress distribution capability is available, and it is difficult to manufacture the shaft tooth section 22 with rolling racks, to be described later. If the tilt angle θ is set to 90 degrees, excessive stresses concentrate on the first step region 30, and the durability of rolling racks used to manufacture the shaft tooth section 22 is reduced.

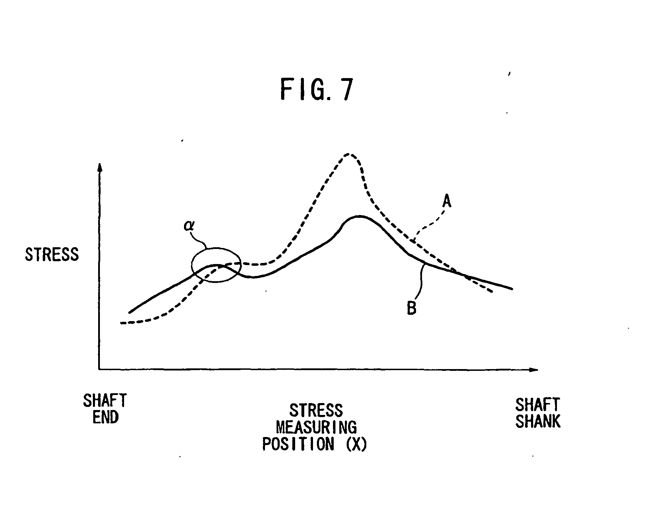

FIG. 7 shows a characteristic curve A (broken-line curve) of stresses on a comparative shaft wherein the first step region 30 and the second step region 32 are not formed in the shaft tooth section 22 and the hub tooth section 28 and a characteristic curve B (solid-line curve) of stresses on a shaft wherein the points P1, P2 are offset from each other by the predetermined distance L4 shown in FIG. 4 and the tilt angle θ of the first step region 30 is set to a large value. A comparison between the characteristic curve A and the characteristic curve B indicates that according to the characteristic curve B which represents the structure shown in FIG. 4, the peak of stresses is reduced and the concentration of stresses is relaxed.

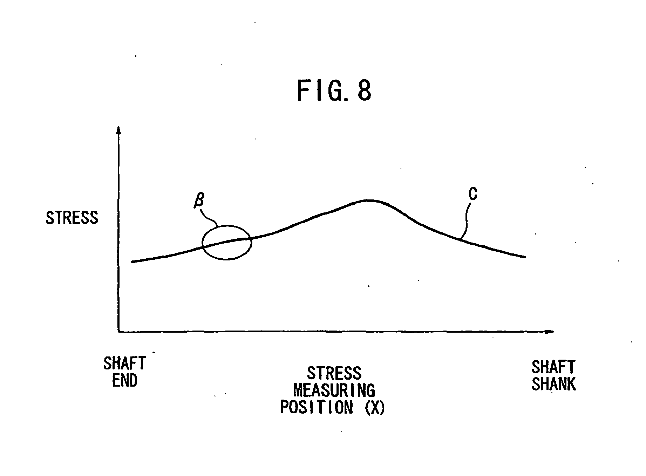

FIG. 8 shows a characteristic curve C of stresses on a shaft wherein the tilt angle θ of the first step region 30 is smaller than with the characteristic curve B. It can be understood from FIG. 8 that by reducing the tilt angle θ to increase the size of the tapered surface 34, the tapered surface 34 is capable of more relaxing stresses (compare a portion α of the characteristic curve B shown in FIG. 7 and a portion β of the characteristic curve C shown in FIG. 8).

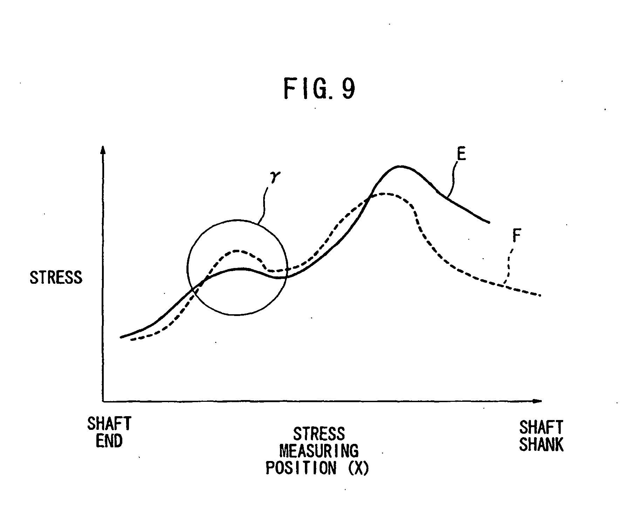

FIG. 9 shows a characteristic curve E (solid-line curve) of stresses on a shaft wherein the point P1 in the shaft tooth section 22 and the point P2 in the hub tooth section 28 are offset from each other by a predetermined distance, and a characteristic curve F (broken-line curve) of stresses on a shaft wherein the points P1, P2 are not offset from each other, i.e., the distance by which the points P1, P2 are spaced horizontally from each other is nil.

A comparison of offset and offset-free portions (see portions γ of the characteristic curves E, F) shows that the characteristic curve E of the shaft wherein the starting point P1 (see FIGS. 3 and 4) in the shaft tooth section 22 and the starting point P2 (see FIGS. 3 and 4) in the hub tooth section 28 are offset from each other is more gradual than the characteristic curve F wherein the starting points P1. P2 are not offset from each other. The offset starting points P1, P2 are effective in relaxing stresses in the area where the radii change.

FIG. 2 shows the manner in which the straight peak 22a of the shaft tooth section 22 and the straight peaks 28a of the hub tooth section 28, which are held in mesh with each other, are in mesh with each other when torque is applied to them in their unloaded state. It is assumed that when torque is applied to the peaks 22a, 28a, a load is applied to them in the direction indicated by the arrow Y which is perpendicular to the axis of the shaft tooth section 22.

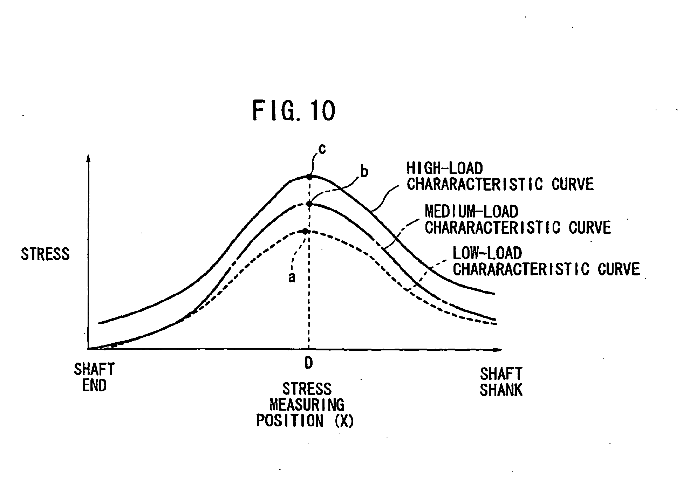

FIG. 10 shows the relationship between stresses developed on the shaft and positions where the stresses are measured (see the arrow X in FIG. 2). If the magnitude of the applied load varies through three stages, i.e., a low load, a medium load, and a high load, then it can be seen that the peak points of stresses reside in substantially the same measuring position D as indicated by points a, b, c, from a low-load characteristic curve, a medium-load characteristic curve, and a high-load characteristic curve which correspond to the above stages, respectively.

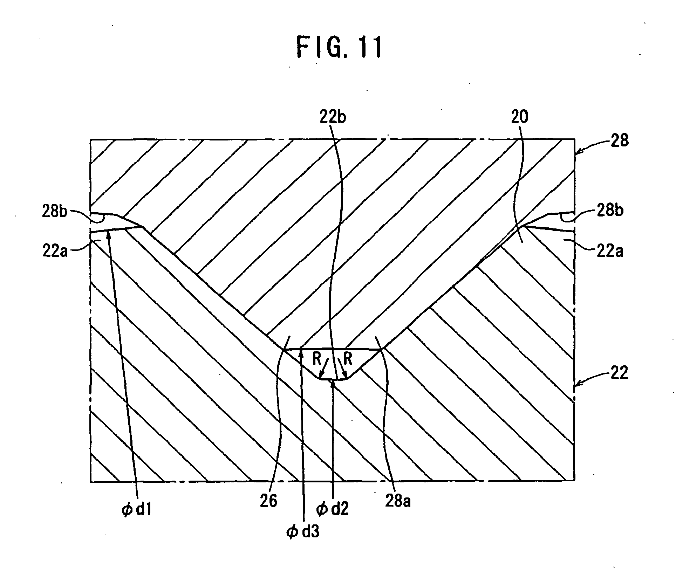

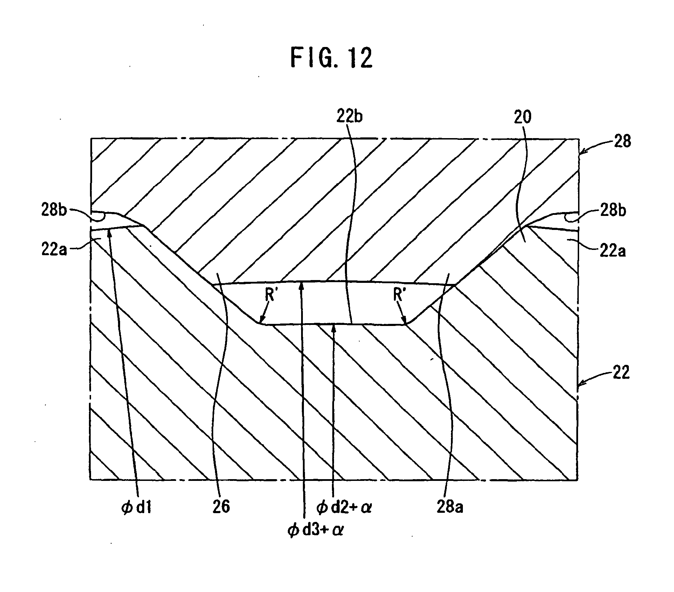

FIGS. 11 and 12 are enlarged partial longitudinal cross-sectional views showing the manner in which the peak 28a of the hub tooth section 28 contacts the valley 22b of the shaft tooth section 22 at the time the shaft 12 and the hub 14 are assembled together. In FIGS. 11 and 12, φd1 through φd3 represent pitch circle radii from the central axis of the shaft 12.

Since the shaft tooth section 22 is straight in shape and the hub tooth section 28 is straight in shape, the side surfaces of the shaft tooth section 22 and the hub tooth section 28 are held in fact-to-face contact with each other at all times (see FIGS. 2, 11, and 12).

As can be understood from a comparison between FIGS. 11 and 12, the radii φd2, φd3 of the shaft tooth section 22 in a stress concentrating region can be increased by α by forming the first step region 30 (see FIG. 3) and the second step region 32 (see FIG. 3) in portions of the shaft tooth section 22 and the hub tooth section 28 which are close to the shaft shank 24.

Since the radii φd2, φd3 of the shaft tooth section 22 in the stress concentrating region are increased by α, the radius of curvature of the bottom land R of the valley 22b of the shaft tooth section 22 can be increased for stress distribution (see R' in FIG. 12). Overall stresses (main stresses) can be lowered by increasing the radius of the region close to the shaft shank 24 as compared with other regions.

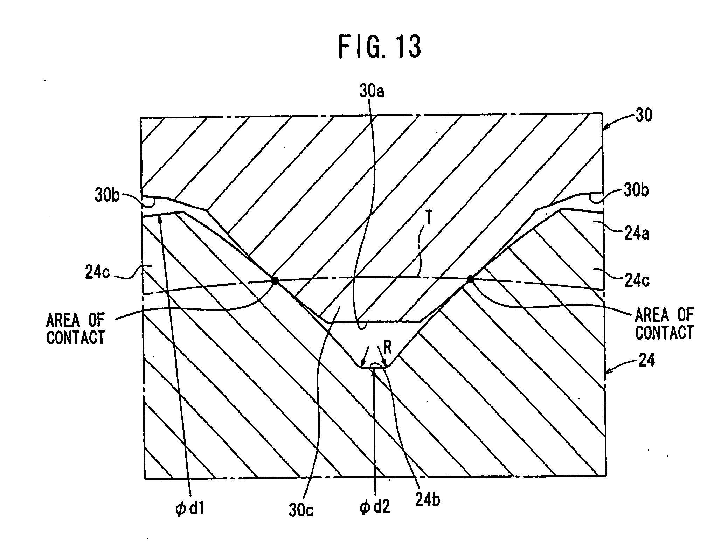

The shaft tooth section and the hub tooth section shown in FIGS. 11 and 12 may be of an involute shape as shown in FIG. 13. In FIG. 13, shaft teeth 22c of the shaft tooth section 22 and hub teeth 28c of the hub tooth section 28 contact each other on a reference pitch circle diameter T. Therefore, the shaft 12 and the hub 14 can easily be machined into the shaft tooth section 22 and the hub tooth section 28, respectively, by rack-shaped tools, and the shaft tooth section 22 and the hub tooth section 28 can smoothly be brought into meshing engagement with each other.

According to the first embodiment, as described above, the point P1 as a starting point of the first step region 30 of the shaft 12 and the point P2 as a starting point of the second step region 32 of the hub 14 are offset substantially horizontally from each other by the distance L4.

Therefore, when torque is applied to the shaft/hub unit 10 wherein the shaft tooth section 22 and the hub tooth section 28 mesh with each other, the stresses imposed on the shaft/hub unit 10 are distributed to the points P1, P2, thereby relaxing stress concentration. Consequently, static mechanical strength and fatigue strength of the area where the shaft tooth section 22 and the hub tooth section 28 mesh with each other are increased.

Furthermore, by setting the tilt angle θ at the starting point P1 of the first step region 30 to a value in the range from 5 degrees to 45 degrees, the tapered surface 34 of the first step region 30 further relaxes stress concentration.

With the shaft 12 used as a power transmitting shaft and the hub 14 as an inner member housed in an outer member of a constant velocity joint, when torque is transmitted from the power transmitting shaft to the hub 14, stresses concentrating on the area where the shaft 12 and the hub 14 engage each other are appropriately relaxed, allowing the drive power to be transmitted reliably to the outer member of the constant velocity joint.

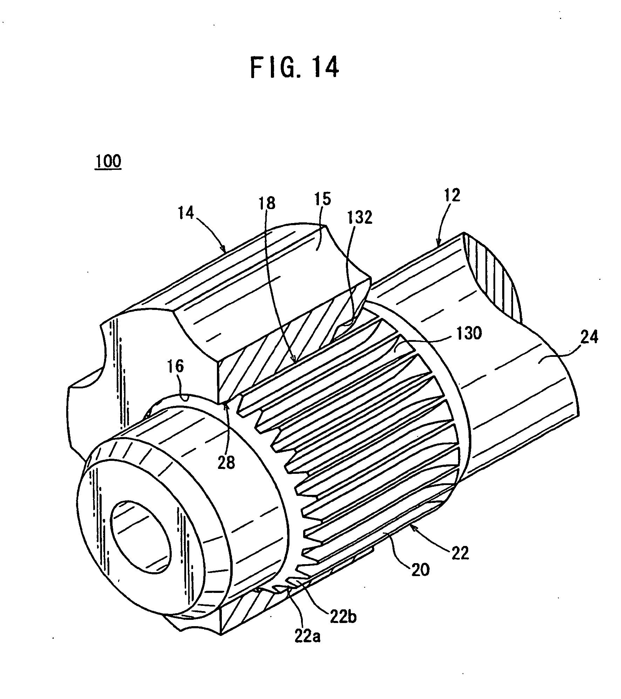

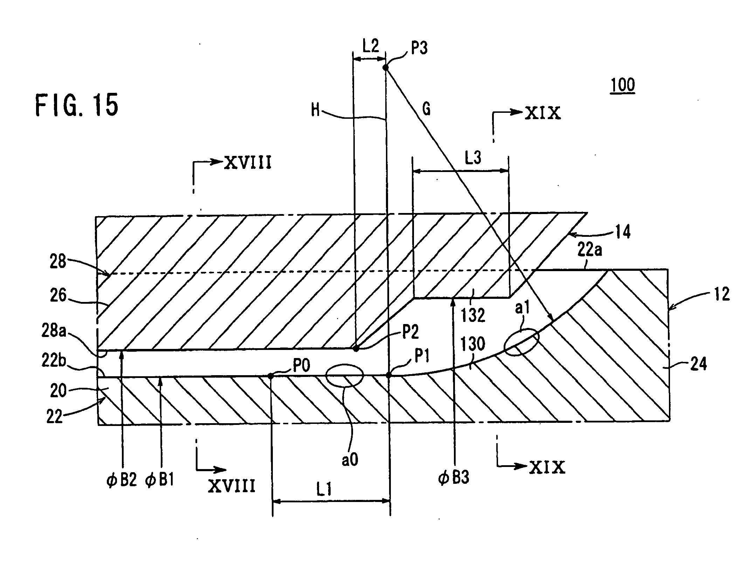

FIG. 14 shows a shaft/hub unit 100 which incorporates a power transmitting mechanism according to a second embodiment. FIG. 15 shows, in enlarged partial longitudinal cross section in the axial direction of the shaft 12, that a peak 28a of a hub tooth section 28 which engages in a valley 22b of a shaft tooth section 22.

In the embodiments to be described below, those parts of shaft/hub units which are identical to those of the shaft/hub unit 10 according to the first embodiment are denoted by identical reference characters, and will not be described in detail below. Those parts which operate in the same manner as and offer the same advantages as those according to the first embodiment will not be described in detail below.

As shown in FIG. 15, a point P1 is established on the bottom land of the valley 22b (valley radius φB1) at a position which is displaced horizontally a predetermined distance L1 toward the shaft shank 24 from the central point P0 of the shaft tooth section 22. From the point P1, an arcuate region 130 extends toward the hub tooth section 28 and is joined to the shaft shank 24, the arcuate region 130 having a radius G of curvature. Stated otherwise, the arcuate region 130 is formed about a point P3 on a base line H which extends from the point P1 substantially perpendicularly to the hub tooth section 28. Insofar as the center P3 of the arcuate region 130 is placed on the base line H, the arcuate region 130 may have any arbitrary radius of curvature.

On the peak 28a of the hub tooth section 28, there is established a point P2 at a position which is offset a predetermined distance L2 from the point P1 in the shaft tooth section 22 in a horizontal direction away from the shaft shank 24. From the point P2, the peak 28a changes its peak radius φB2 to a peak radius φB3, providing a step region 132 with the peak radius φB3. The step region 132 extends horizontally a predetermined distance L3 toward the shaft shank 24.

The step region 132 of the hub tooth section 28, which is retracted away from the shaft tooth section 22, may have a slanted surface or an arcuate curved surface or a compound surface having a predetermined radius of curvature. The tilt angle of the step region 132 starting from the point P2 is set as desired complementarily to the tilt angle of the arcuate region 130.

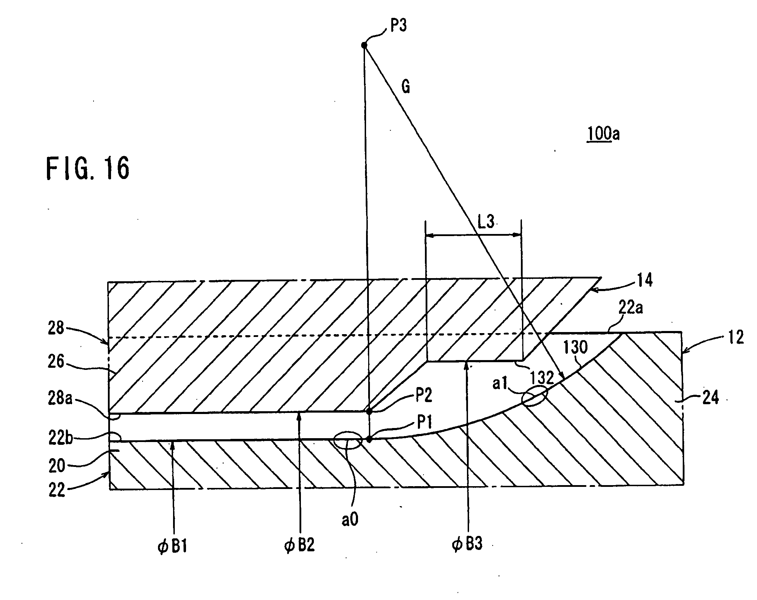

The shape of the hub tooth section 28 is not limited to the shape of the step region 132, but may include a round shape, a tapered tape, or the like having a predetermined radius of curvature. The valleys 28b of the hub tooth section 28 have an inside diameter which remains constant. The peak 22a of the shank tooth section 22 has an outside diameter which may remain constant in the axial direction, as shown in FIGS. 15 and 16, or which may progressively decrease from an area close to the point P1 toward the shaft shank 24, as shown in FIG. 5.

The valley radius φB1 represents a distance from the central axis of the shaft 12 to the bottom land of the valley 22b of the shaft tooth section 22. The peak radii φB2, φB3 represent respective distances from the central axis of the shaft 12 to the top lands of the peak 28a of the hub tooth section 28.

As can be seen from FIG. 15, the point P1 as a starting point where the arcuate region 130 of the shaft tooth section 22 starts to rise and the point P2 as a starting point where the step region 132 in the hub tooth section 28 starts to rise are offset substantially horizontally from each other by a predetermined distance L2.

Therefore, when torque is applied to the shaft/hub unit 100 wherein the shaft tooth section 22 and the hub tooth section 28 mesh with each other, since the point P1 in the shaft tooth section 22 and the point P2 in the hub tooth section 28 are offset from each other by the distance L2, the stresses imposed on the shaft/hub unit 100 are distributed to areas a0, a1 in the shaft tooth section 22 by the arcuate region 130, thereby relaxing stress concentration and reducing the peak of stresses. As a result, static mechanical strength and fatigue strength of the area where the shaft tooth section 22 and the hub tooth section 28 mesh with each other are increased.

As shown in FIG. 16, the points P1, P2 may be vertically aligned with each other without being offset from each other. With such an arrangement, the arcuate region 130 in the shaft tooth section 22 and the step region 132 in the hub tooth section 28 coact with each other in distributing the stresses applied to the arcuate region 130 and relaxing stress concentration.

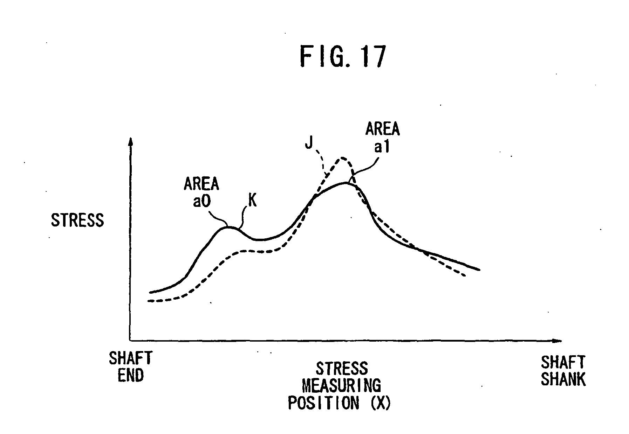

FIG. 17 shows a characteristic curve J (broken-line curve) of stresses on a comparative shaft wherein the step region 132 is not formed in the hub tooth section 28 and a characteristic curve K (solid-line curve) of stresses on a shaft wherein the points P1, P2 are offset from each other by a predetermined distance and the step region 132 with the starting point P2 is formed in the hub tooth section 28.

A comparison between the characteristic curve J and the characteristic curve K indicates that according to the characteristic curve K of the structure shown in FIG. 15, the peak of stresses is distributed to areas a0, a1, and hence is reduced in the area a1. Specifically, though the stress in the area a0 of the characteristic curve K is higher than the stress in the area a0 of the characteristic curve J, since the maximum stress in the area a1 of the characteristic curve K is lower than that of the characteristic curve J. the peak of maximum stresses produced on the shaft 12 is reduced.

Stresses on a shaft wherein the points P1, P2 are offset from each other by a predetermined distance and stresses on a shaft wherein the points P1, P2 are not offset from each other, i.e., the distance by which the points P1, P2 are spaced horizontally from each other is nil, are the same as those of the characteristic curves E, F shown in FIG. 9 according to the first embodiment. Therefore, the characteristic curve E representative of the shaft wherein the points P1, P2 are offset from each other is more gradual than the characteristic curve F representative of the shaft wherein the points P1, P2 are not offset from each other. The offset starting points P1. P2 are effective in relaxing stresses in the area where the radii change.

If the magnitude of the applied load varies through three stages, i.e., a low load (broken-line curve), a medium load (dot-and-dash-line curve), and a high load (solid-line curve), then the peak points of stresses reside in substantially the same measuring position D as indicated by points a, b, c, from a low-load characteristic curve, a medium-load characteristic curve, and a high-load characteristic curve which correspond to the above stages, respectively, as with the first embodiment (see FIG. 10).

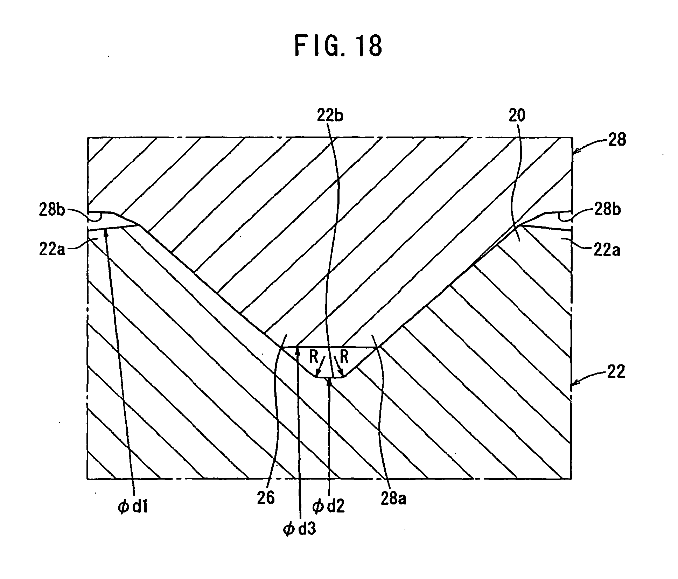

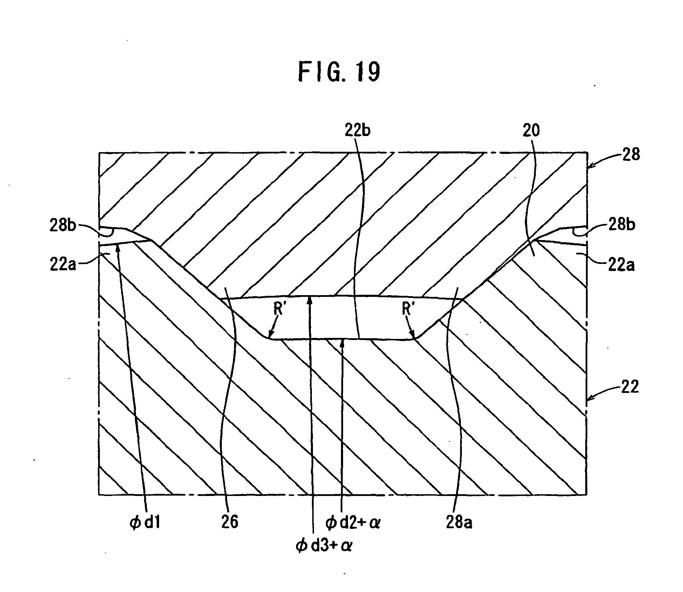

FIGS. 18 and 19 are enlarged partial longitudinal cross-sectional views showing the manner in which the peak 28a of the hub tooth section 28 contacts the valley 22b of the shaft tooth section 22 at the time the shaft 12 and the hub 14 are assembled together. The operation and advantages of the shaft/hub unit 100 are identical to those of the shaft/hub unit 10 according to the first embodiment, and will not be described in detail below.

According to the second embodiment, the point P1 as a starting point of the arcuate region 130 of the shaft 12 and the point P2 as a starting point of the step region 132 of the hub 14 are offset substantially horizontally from each other by the distance L2.

Therefore, when torque is applied to the shaft/hub unit 100 wherein the shaft tooth section 22 and the hub tooth section 28 mesh with each other, the stresses imposed on the shaft/hub unit 100 are distributed to the areas a0, a1 in the shaft tooth section 22 by the arcuate region 130, thereby relaxing stress concentration and reducing the peak of stresses in the area a1. As a result, since stress concentration is relaxed, static mechanical strength and fatigue strength of the area where the shaft tooth section 22 and the hub tooth section 28 mesh with each other are increased.

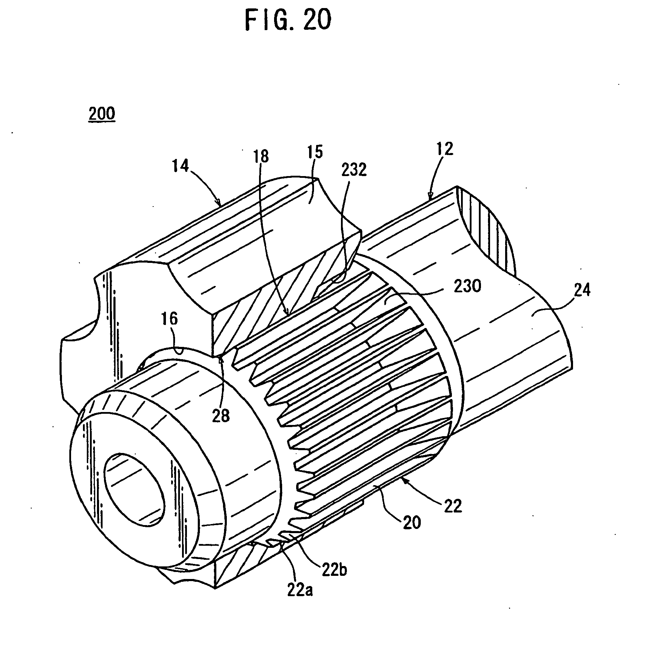

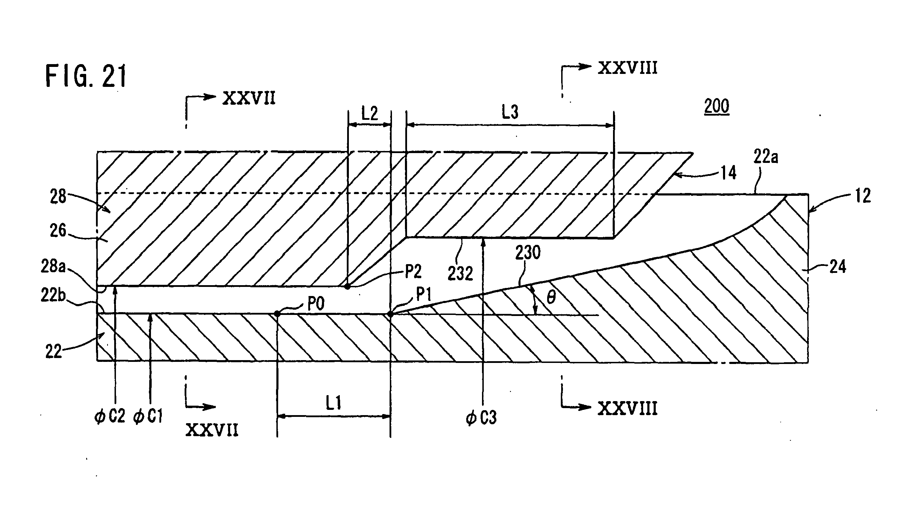

FIG. 20 shows a shaft/hub unit 200 which incorporates a power transmitting mechanism according to a third embodiment. FIG. 21 shows, in enlarged partial longitudinal cross section in the axial direction of the shaft 12, that a peak 28a of a hub tooth section 28 engages in a valley 22b of a shaft tooth section 22.

A point P1 is established on the bottom land of the valley 22b at a position which is displaced horizontally a predetermined distance L1 toward the shaft shank 24 from the central point P0 of the shaft shank section 22 on the bottom land of the valley 22b (valley radius φC1). From the point P1, the radius of the bottom land of the valley 22b is progressively increased toward the hub tooth section 28, providing a tapered region 230 tilted at a predetermined angle θ. The tapered region 230 extends toward and is joined to the shaft shank 24.

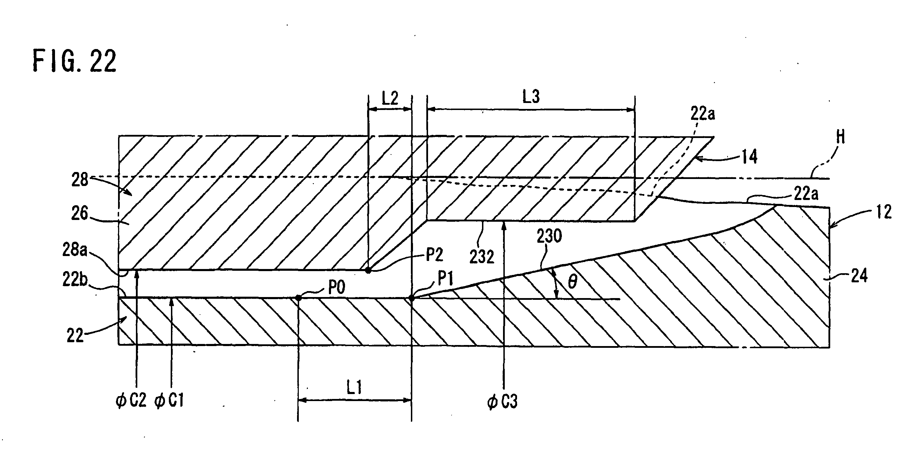

The peak 22a of the shank tooth section 22 has an outside diameter which may remain constant in the axial direction, as shown in FIG. 21, or which may progressively decrease from an area close to the point P1 toward the shaft shank 24, as shown in FIG. 22.

With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 22, the reference character "H" represents a horizontal line to be compared with a change (reduction) in the outside diameter of the peak 22a.

On the peak 28a of the hub tooth section 28, there is established a point P2 at a position which is offset a predetermined distance L2 from the point P1 in the shaft tooth section 22 in a horizontal direction away from the shaft shank 24. From the point P2, the peak 28a changes its peak radius φC2 to a peak radius φC3, providing a step region 232 with the peak radius φC3. The step region 232 extends horizontally a predetermined distance L3 toward the shaft shank 24.

The step region 232 of the hub tooth section 28 may have a slanted surface or an arcuate curved surface or a compound surface having a predetermined radius of curvature. The tilt angle of the step region 232 starting from the point P2 is set as desired complementarily to the tilt angle θ of the tapered region 230. The shape of the hub tooth section 28 is not limited to the shape of the step region 232, but may include a round shape, a tapered tape, or the like having a predetermined radius of curvature. The valleys 28b of the hub tooth section 28 have an inside diameter which remains constant.

The valley radius φC1 represents a distance from the central axis of the shaft 12 to the bottom land of the valley 22b of the shaft tooth section 22. The peak radii φC2, φC3 represent respective distances from the central axis of the shaft 12 to the top lands of the peak 28a of the hub tooth section 28.

As can be seen from FIG. 21, the point P1 as a starting point where the straight tapered region 230 of the shaft tooth section 22 starts to rise and the point P2 as a starting point where the step region 232 in the hub tooth section 28 starts to rise are offset substantially horizontally from each other by a predetermined distance L2.

Therefore, when torque is applied to the shaft/hub unit 200 wherein the shaft tooth section 22 and the hub tooth section 28 mesh with each other, since the point P1 in the shaft tooth section 22 and the point P2 in the hub tooth section 28 are offset from each other by the distance L2, the stresses imposed on the shaft/hub unit 200 are distributed to the points P1, P2, thereby relaxing stress concentration. As a result, static mechanical strength and fatigue strength of the area where the shaft tooth section 22 and the hub tooth section 28 mesh with each other are increased.

By making the rise angle θ of the tapered region 230 smaller, the area of the tapered region 230 as a stress acting surface can be increased for more stress relaxation.

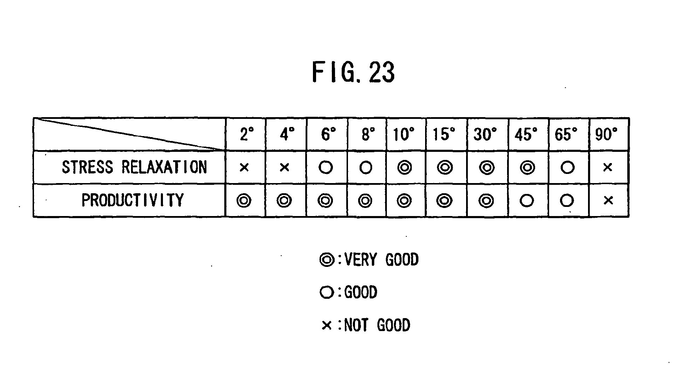

The relationship between the rise angle θ of the tapered region 230, stress relaxation, and productivity is shown in FIG. 23. It can be seen from FIG. 23 that stress relaxation and productivity are good (see symbol "O") if the rise angle θ is set to a value in the range from 6 degrees to 65 degrees, and optimum (see symbol "⊚") if the rise angle θ is set to a value in the range from 10 degrees to 30 degrees.

If the rise angle 6 is set to a value less than 6 degrees, no sufficient stress distribution capability is available. If the rise angle θ is set to a value in excess of 65 degrees, an inexpensive rolling process using rolling racks, to be described later, cannot be employed, and productivity is lowered.

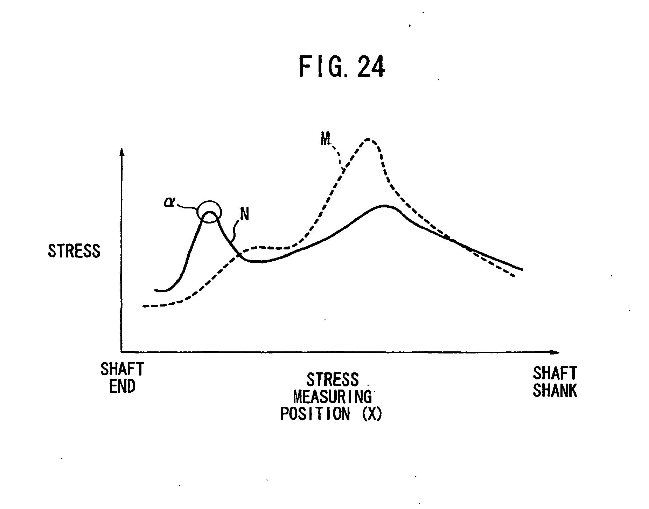

FIG. 24 shows a characteristic curve M (broken-line curve) of stresses on a comparative shaft wherein the tapered region 230 and the step region 232 are not formed in the shaft tooth section 22 and the hub tooth section 28 and a characteristic curve N (solid-line curve) of stresses on a shaft wherein the points P1, P2 are not offset from each other, but vertically aligned with each other and the step region 232 is formed. It can be seen from FIG. 24 that according to the characteristic curve N representing the shaft wherein the points P1, P2 are not offset from each other, the peak of stresses is lower and the concentration of stresses is less intensive than according to the characteristic curve M representing the comparative shaft, but more stresses concentrate on an area where the points P1, P2 are vertically aligned with each other (see a portion α in FIG. 24).

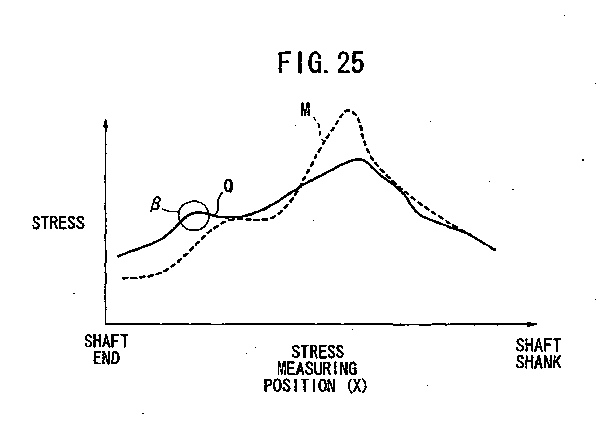

In FIG. 25, a characteristic curve Q represents stresses on the shaft having the structure shown in FIG. 21 wherein the tapered region 230 and the step region 232 are formed respectively in the shaft tooth section 22 and the hub tooth section 28, and the P1 as a starting point of the tapered region 230 and the point P2 as a starting point of the step region 232 are offset from each other horizontally by a predetermined distance L2. It can be understood from FIG. 25 that according to the characteristic curve Q, stresses in the area where the points P1, P2 are offset from each other (see a portion β in FIG. 25) are less intensive than according to the characteristic curve M representing the structure wherein the points P1, P2 are not offset from each other.

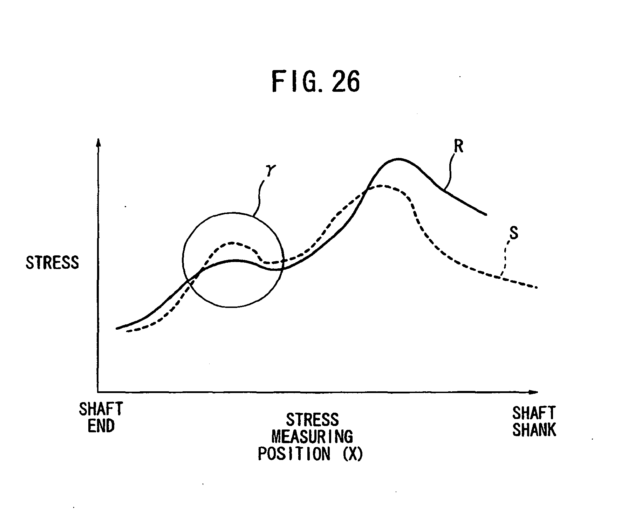

FIG. 26 shows a characteristic curve R (solid-line curve) of stresses on a shaft wherein the point P1 in the shaft tooth section 22 and the point P2 in the hub tooth section 28 are offset from each other by a predetermined distance, and a characteristic curve S (broken-line curve) of stresses on a shaft wherein the points P1, P2 are not offset from each other, i.e., the distance by which the points P1, P2 are spaced horizontally from each other is nil.

A comparison of offset and offset-free portions (see portions γ in FIG. 26) shows that the characteristic curve M of the shaft wherein the starting point P1 in the shaft tooth section and the starting point P2 in the hub tooth section are offset from each other is more gradual than the characteristic curve N wherein the starting points P1, P2 are not offset from each other. The offset starting points P1, P2 are effective in relaxing stresses in the area where the radii change.

The peak points of stresses reside in substantially the same measuring position D as indicated by points a, b, c, from a low-load characteristic curve, a medium-load characteristic curve, and a high-load characteristic curve which correspond to the above stages, respectively, as with the first embodiment (see FIG. 10).

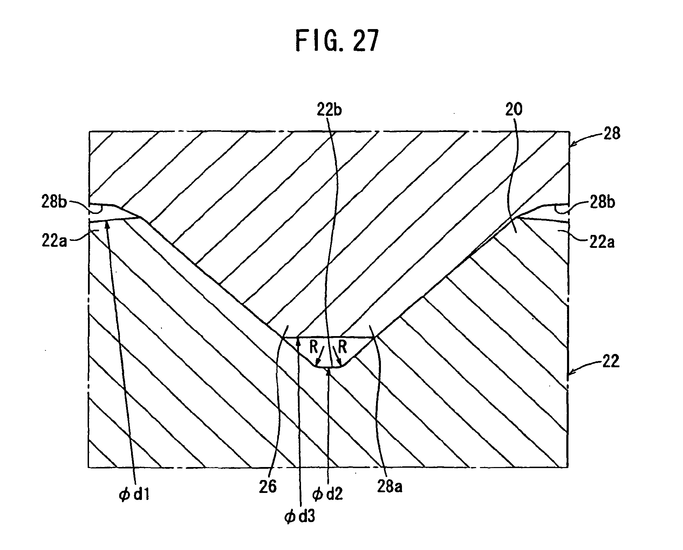

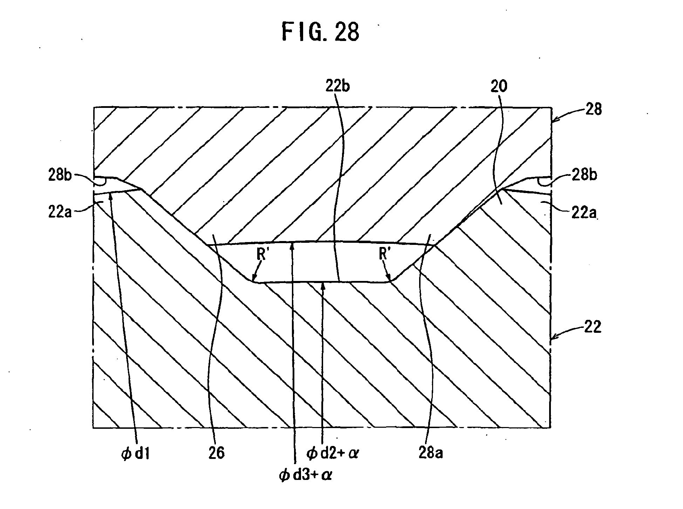

FIGS. 27 and 28 are enlarged partial longitudinal cross-sectional views showing the manner in which the peak 28a of the hub tooth section 28 contacts the valley 22b of the shaft tooth section 22b at the time the shaft 12 and the hub 14 are assembled together. The operation and advantages of the shaft/hub unit 200 are identical to those of the shaft/hub unit 10 according to the first embodiment, and will not be described in detail below. The shaft tooth section and the hub tooth section may be of an involute shape as shown in FIG. 13.

According to the third embodiment, the point P1 as a starting point of the tapered region 230 of the shaft 12 and the point P2 as a starting point of the step region 232 of the hub 14 are offset substantially horizontally from each other by the distance L2.

Therefore, when torque is applied to the shaft/hub unit 200 wherein the shaft tooth section 22 and the hub tooth section 28 mesh with each other, the stresses imposed on the shaft/hub unit 200 are distributed to the points P1, P2, thereby relaxing stress concentration. As a result, static mechanical strength and fatigue strength of the area where the shaft tooth section 22 and the hub tooth section 28 mesh with each other are increased.

With the shaft 12 used as a power transmitting shaft and the hub 14 as an inner member housed in an outer member of a constant velocity joint, when torque is transmitted from the power transmitting shaft to the hub 14, stresses concentrating on the area where the shaft 12 and the hub 14 engage each other are appropriately relaxed, allowing the drive power to be transmitted reliably to the outer member of the constant velocity joint.

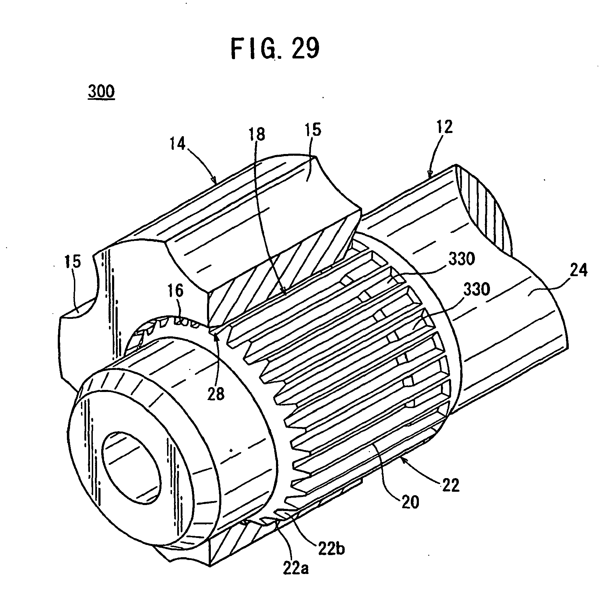

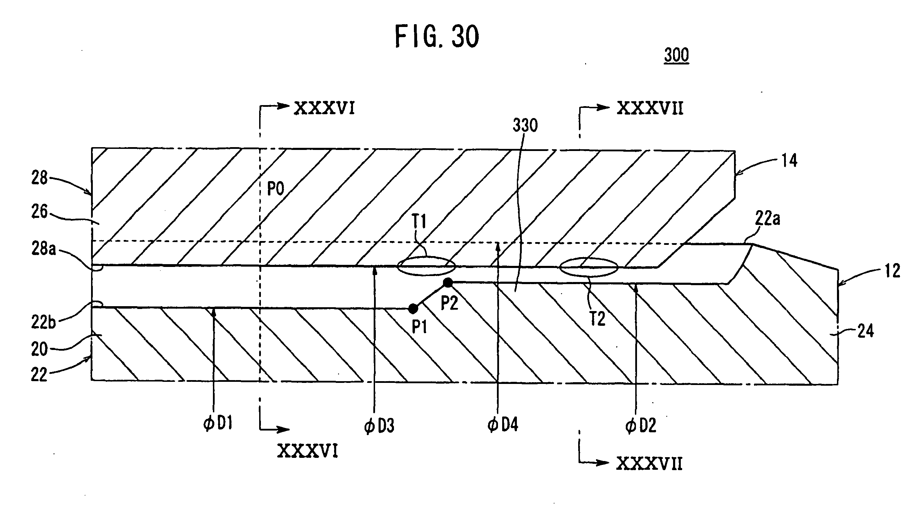

FIG. 29 shows a shaft/hub unit 300 which incorporates a power transmitting mechanism according to the present invention. FIG. 30 shows, in enlarged partial longitudinal cross section in the axial direction of the shaft 12, that a peak 28a of a hub tooth section 28 engages in a valley 22b of a shaft tooth section 22.

As shown in FIG. 30, the valley 22b of the shaft tooth section 22 has a step region 330 extending horizontally a predetermined distance toward the shaft shank 24 and raised from a point P1, which is displaced a predetermined distance from the central point P0 toward the shaft shank 24, toward the hub tooth section 28 obliquely at a predetermined angle.

The step region 330 extends horizontally a predetermined distance from the central point P2 and is joined to the shaft shank 24. Stated otherwise, the radius of the shaft tooth section 22 changes from a valley radius φD1 at the valley 22b to a valley radius φD2 at the step region 330.

The step region 330 may have a slanted surface or an arcuate curved surface or a compound surface having a predetermined radius of curvature.

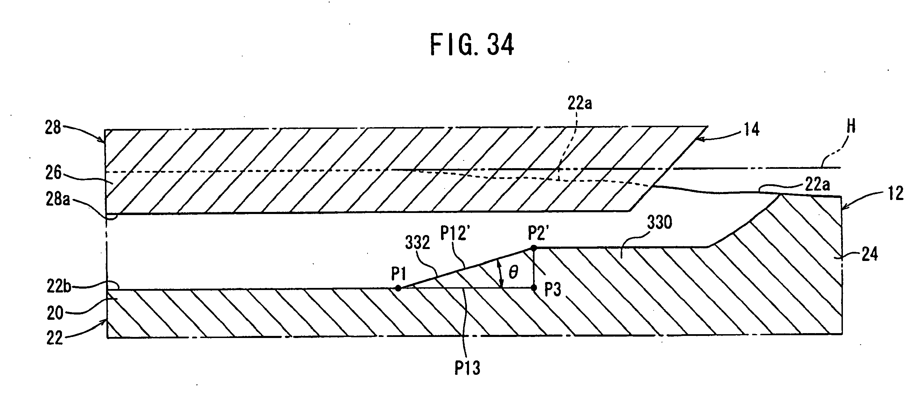

The peak 22a of the shank tooth section 22 has an outside diameter which may remain constant in the axial direction, as shown in FIGS. 30 through 33, or which may progressively decrease from an area close to the point P1 toward the shaft shank 24, as shown in FIG. 34. With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 34, the reference character "H" represents a horizontal line to be compared with a change (reduction) in the outside diameter of the peak 22a.

The peak 28a of the hub tooth section 28 has its outside radius φD3 remaining constant in the axial direction of the hub 14, and the valley 28b of the hub tooth section 28 also has its inside radius φD4 remaining constant in the axial direction of the hub 14.

The valley radii φD1, φD2 represent a distance from the central axis of the shaft 12 to the bottom land of the valley 22b of the shaft tooth section 22. The peak radius φD3 represents a distance from the central axis of the shaft 12 to the top land of the peak 28a of the hub tooth section 28.

Therefore, when torque is applied to the shaft/hub unit 300 wherein the shaft tooth section 22 and the hub tooth section 28 mesh with each other, stresses applied to the shaft/hub unit 300 are distributed to an area T1 of the hub tooth section 28 which faces the point P1 in the shaft tooth section 22 and an area T2 of the hub tooth section 28 which faces the step region 330 of the shaft tooth section 22, so that the concentration of stresses is relaxed (see FIG. 30).

As a result, since the concentration of stresses is relaxed, but stresses are distributed, static mechanical strength and fatigue strength of the area where the shaft tooth section 22 and the hub tooth section 28 mesh with each other are increased.

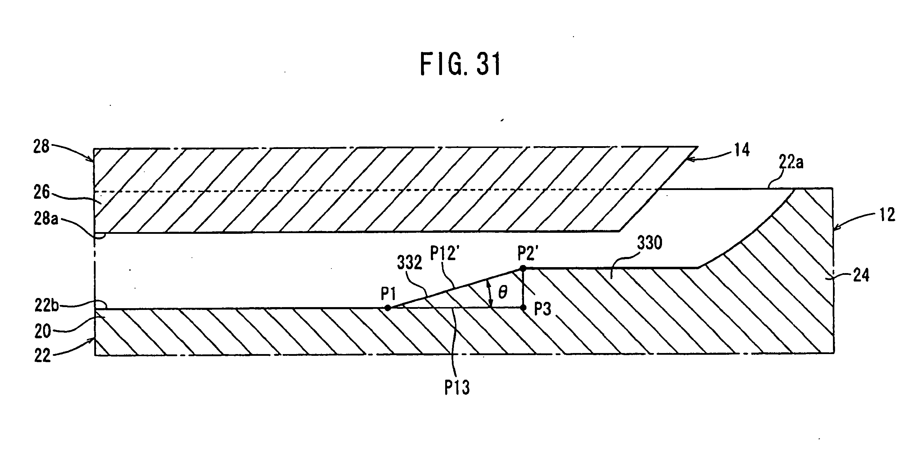

In FIG. 31, a right-angled triangle formed by interconnecting points P1, P2', P3 in the valley 22b of the shaft tooth section 22 may have its cross-sectional area increased, and the angle θ formed between a line segment P13 interconnecting the points P1, P3 and a line segment P12' interconnecting the points P1, P2', i.e., the tilt angle θ of the step region 330, may be set to a small value for further relaxing stress concentration with a first tapered surface 332 of the step region 330.

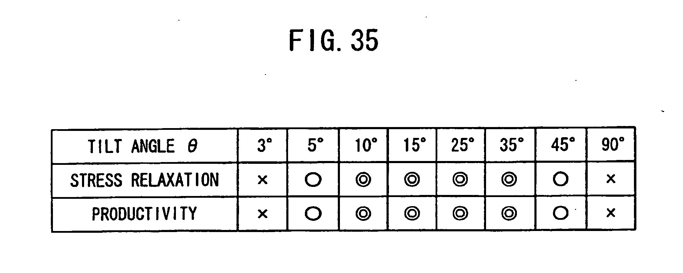

The relationship between the tilt angle θ of the step region 330 (first tapered surface 332), stress relaxation, and productivity is shown in FIG. 35. It can be seen from FIG. 35 that stress relaxation and productivity are good (see symbol "○") if the tilt angle θ is set to a value in the range from 5 degrees to 45 degrees, and optimum (see symbol "⊚") if the tilt angle θ is set to a value in the range from 10 degrees to 35 degrees.

If the tilt angle θ is set to a value less than 5 degrees, no sufficient stress distribution capability is available, and it is difficult to manufacture the shaft tooth section 22 with rolling racks, to be described later. If the tilt angle θ is set to a value in excess of 45 degrees, excessive stresses concentrate on the step-like step region 330, and the durability of rolling racks used to manufacture the shaft tooth section 22 is reduced.

An ordinary shaft/hub spline fitting arrangement which is free of the step region 330 has a stress peak point produced in the vicinity of the shaft shank 24. According to the fourth embodiment, however, the step region 330 is provided in the shaft tooth section 22 to allow some stresses to concentrate on the hub tooth section 28 facing the point P1, thus distributing stresses that tend to concentrate on the shaft shank 24. If the tilt angle θ of the step region 330 in the shaft tooth section 22 is set to too a large value, e.g., 90 degrees, for example, then excessive stresses concentrate on the hub tooth section 28 facing the point P1, failing to provide a stress distributing (stress relaxing) capability. By setting the tilt angle θ, i.e., the rise angle, of the step region 330 to an appropriate value, the concentration of stresses in the vicinity of the shaft shank 24 is suitably distributed to reduce stresses at the peak point.

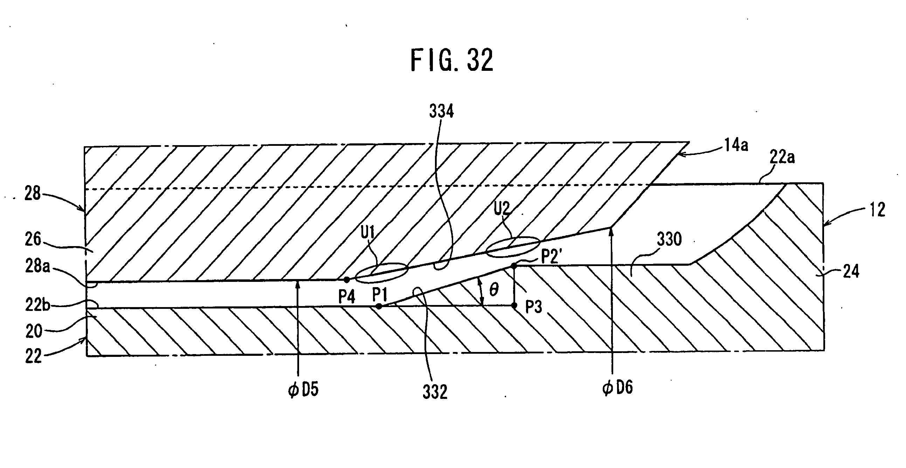

As shown in FIG. 32, in a hub 14a engaging the shaft tooth section 22, a point P4 may be established as a rising point on the peak 28a of the horizontally extending hub tooth section 28, and a second tapered surface 334 may be formed as extending from the point P4 toward the shaft shank 24 obliquely at a predetermined angle. The second tapered surface 334 is formed so as to face the point P1 as a starting point of the step region 330 in the shaft tooth section 22 and the first tapered surface 332 therein, and has its radius increasing from a peak radius φD5 to a peak radius φD6 in a direction away from the shaft tooth section 22.

The point P1 as a starting point of the step region 330 (first tapered surface 332) in the shaft tooth section 22 and the point P4 as a starting point of the second tapered surface 334 in the hub tooth section 28 may be offset from each other by a predetermined distance in the axial direction of the shaft 12, or the points P1, P4 may be aligned with each other. With such an arrangement, the step region 330 in the shaft tooth section 22 and the second tapered surface 334 in the hub tooth section 28 coact with each other in distributing the stresses applied to the second tapered surface 334 and relaxing stress concentration.

Therefore, when torque is applied to the shaft/hub unit 300 wherein the shaft tooth section 22 and the hub tooth section 28 having the second tapered surface 334 mesh with each other, the stresses imposed on the shaft/hub unit 300 are distributed by the second tapered surface 334 to an area U1 of the hub tooth section 28 which faces the point P1 in the shaft tooth section 22 and an area U2 of the hub tooth section 28 which faces the point P2' in the shaft tooth section 22, so that the concentration of stresses is relaxed and the peak of stresses is reduced. As a result, the first tapered surface 332 in the hub tooth section 28 is effective in increasing static mechanical strength and fatigue strength of the area where the shaft tooth section 22 and the hub tooth section 28 mesh with each other.

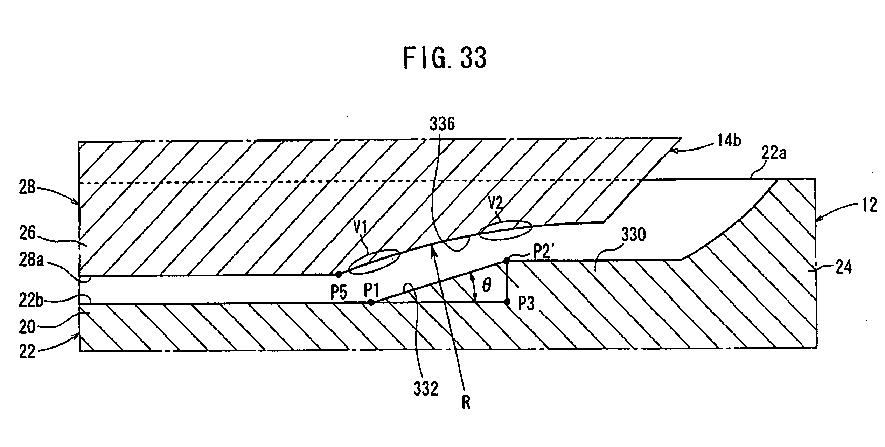

As shown in FIG. 33, in a hub 14b engaging the shaft tooth section 22, a point P5 may be established as a rising point on the peak 28a of the horizontally extending hub tooth section 28, and an arcuate surface 336 having a predetermined radius R of curvature may be formed as extending from the point P5 toward the shaft shank 24. The arcuate surface 336 is formed so as to face the point P1 as a starting point of the step region 330 in the shaft tooth section 22 and the first tapered surface 332 therein, and is retracted away from the shaft tooth section 22.

The point P1 as a starting point of the step region 330 (first tapered surface 332) in the shaft tooth section 22 and the point P5 as a starting point of the arcuate surface 336 in the hub tooth section 28 may be offset from each other by a predetermined distance in the axial direction of the shaft 12, or the points P1, P5 may be aligned with each other. With such an arrangement, the step region 330 in the shaft tooth section 22 and the arcuate surface 336 in the hub tooth section 28 coact with each other in distributing the stresses applied to the arcuate surface 336 and relaxing stress concentration.

Therefore, when torque is applied to the shaft/hub unit 300 wherein the shaft tooth section 22 and the hub tooth section 28 mesh with each other, the stresses imposed on the shaft/hub unit 300 are distributed by the arcuate surface 336 to an area V1 of the hub tooth section 28 which faces the point P1 in the shaft tooth section 22 and an area V2 of the hub tooth section 28 which faces the point P2' in the shaft tooth section 22, so that the concentration of stresses is relaxed and the peak of stresses is reduced. As a result, the arcuate surface 336 in the hub tooth section 28 is effective in increasing static mechanical strength and fatigue strength of the area where the shaft tooth section 22 and the hub tooth section 28 mesh with each other.

A characteristic curve A (broken-line curve) of stresses on a comparative shaft wherein the step region 330 is not formed in the shaft tooth section 22 and a characteristic curve B (solid-line curve) of stresses on a shaft wherein the step region 330 starting from the starting point P1 is formed in the shaft tooth section 22, are identical to those shown in FIG. 7 according to the first embodiment. It can be understood that a comparison between the characteristic curve A and the characteristic curve B indicates that according to the characteristic curve B which represents the structure having the step region 330, the peak of stresses is reduced and the concentration of stresses is relaxed.

A characteristic curve C of stresses on a shaft wherein the tilt angle θ of the step region 330 is smaller than with the characteristic curve B is identical to that shown in FIG. 8 according to the first embodiment. It can be understood that the first tapered surface 332 with the smaller tilt angle θ is effective in more stress relaxation.

The peak points of stresses imposed depending on applied loads reside in substantially the same measuring position D as indicated by points a, b, c, as with the first embodiment (see FIG. 10).

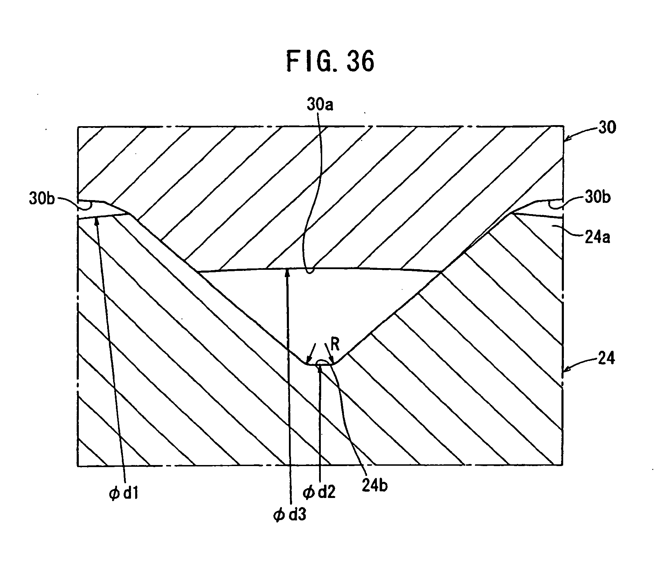

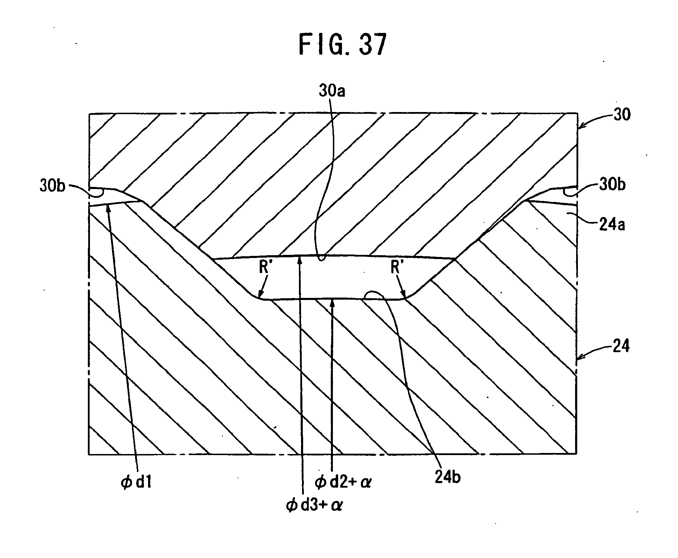

FIGS. 36 and 37 are enlarged partial longitudinal cross-sectional views showing the manner in which the peak 28a of the hub tooth section 28 contacts the valley 22b of the shaft tooth section 22 at the time the shaft 12 and the hub 14 are assembled together. The operation and advantages of the shaft/hub unit 300 are identical to those of the shaft/hub unit 10 shown in FIGS. 11 and 12, and will not be described in detail below.

A process of manufacturing the spline teeth 20 of the shaft tooth section 22 will be described below.

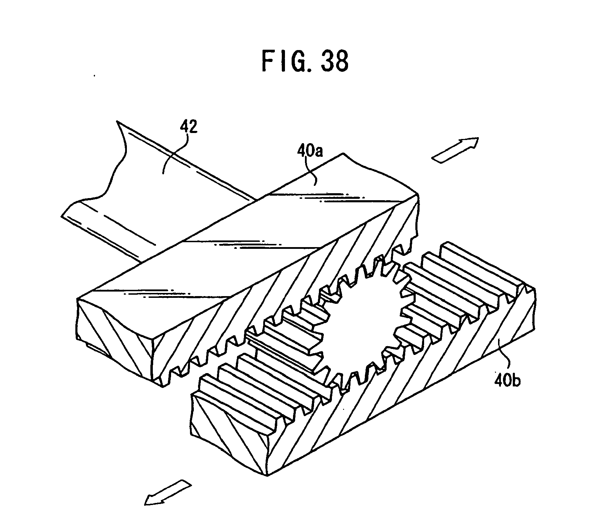

As shown in FIG. 38, a rod-shaped workpiece 42 which has been machined into a predetermined shape by a tool in a previous machining process is inserted between upper and lower rolling racks 40a, 40b each made of a hard material and having a substantially rectangular shape. While the rolling racks 40a, 40b are being pressed against the workpiece 42, the rolling racks 40a, 40b are displaced in opposite directions indicated by the arrows by an actuator (not shown) to form splines on the outer circumferential surface of the workpiece 42.

The spline teeth 20 of the shaft tooth section 22 can thus easily be formed by the above rolling process. Tool grooves (tool marks) having a depth of about 50 µm are formed in the top lands of the spline teeth 20 of the shaft tooth section 22 by the tool in the previous machining process.

The rolling process can form the spline teeth 26 in shorter cycles and allows the rolling racks 40a, 40b to have a longer service life than a pressing process (forging process). According to the rolling process, the forming teeth of the rolling racks 40a, 40b can be polished again for reuse. The rolling process is more advantageous as to cost from the standpoints of service life, forming cycle, and rack reusability than the pressing process (forging process).

However, since the spline teeth are formed by a material flow toward the top lands thereof in the rolling process, the top lands of the spline teeth formed by the rolling process may not necessarily be uniform in shape.

## Claims

1. A mechanism for transmitting torque between a shaft (12) and a hub (14) disposed around the shaft (12) while holding a shaft tooth section (22) formed on the shaft (12) and a hub tooth section (28) formed on the hub (14) in engagement with each other, wherein
said shaft tooth section (22) has a straight peak (22a) having a constant tooth thickness and a valley (22b) having an outside diameter varying from an end of the shaft (12) toward a shaft shank (24) of the shaft (12), said valley (22b) having a step region (330) raised toward said hub tooth section (28) obliquely at a predetermined angle;
**characterized in that** said hub tooth section (28) has a straight peak (28a) having a constant tooth thickness and a valley (28b), said peak (28a) and said valley (28b) having constant inside diameters from the end toward said shaft shank (24) in the axial direction of the shaft (12).

2. A mechanism according to claim 1, wherein said step region (330) has a tilt angle (θ) set to a value ranging from 5 degrees to 45 degrees.

## Patentansprüche

1. Mechanismus zur Drehmomentübertragung zwischen einer Welle (12) und einer um die Welle (12) herum angeordneten Nabe (14), während ein an der Welle (12) ausgebildeter Wellenverzahnungsabschnitt (22) und ein an der Nabe (14) ausgebildeter Nabenverzahnungsabschnitt (28) miteinander in Eingriff gehalten werden, worin
der Wellenverzahnungsabschnitt (22) eine gerade Spitze (28a) mit konstanter Zahndicke sowie ein Tal (22b) mit einem Außendurchmesser, der sich von einem Ende der Welle (12) zu einem Wellenschaft (24) der Welle (12) verändert, aufweist, wobei das Tal (22b) einen Stufenbereich (330) aufweist, der schräg mit einem vorbestimmten Winkel zu dem Nabenverzahnungsabschnitt (28) hin ansteigt;
**dadurch gekennzeichnet, dass** der Nabenverzahnungsabschnitt (28) eine gerade Spitze (28a) mit konstanter Zahndicke und ein Tal (28b) aufweist; wobei die Spitze (28a) und das Tal (28b) vom Ende zu dem Wellenschaft (24) in der axialen Richtung der Welle (12) konstante Innendurchmesser aufweisen.

2. Mechanismus nach Anspruch 1, worin der Stufenbereich (330) einen Neigungswinkel (θ) aufweist, der auf einen Wert im Bereich von 5° bis 45° gelegt ist.

## Revendications

1. Mécanisme de transmission de couple entre un arbre (12) et un moyeu (14) disposé autour de l'arbre (12) tout en maintenant une partie dentée d'arbre (22) formée sur l'arbre (12) et une partie dentée de moyeu (28) formée sur le moyeu (14) en prise l'une avec l'autre, dans lequel
ladite partie dentée d'arbre (22) comporte une crête droite (22a) ayant une épaisseur de dent constante et un creux (22b) ayant un diamètre extérieur variant d'une extrémité de l'arbre (12) vers une tige d'arbre (24) de l'arbre (12), ledit creux (22b) ayant une région en escalier (330) montant vers ladite partie dentée de moyeu (28) obliquement à un angle prédéterminé ;
**caractérisé en ce que** ladite partie dentée de moyeu (28) comporte une crête droite (28a) ayant une épaisseur de dent constante et un creux (28b), ladite crête (28a) et ledit creux (28b) ayant des diamètres intérieurs constants de l'extrémité vers ladite tige d'arbre (24) dans la direction axiale de l'arbre (12).

2. Mécanisme selon la revendication 1, dans lequel ladite région en escalier (330) a un angle d'inclinaison (θ) réglé à une valeur dans une plage de 5 degrés à 45 degrés.
